# EUROPEAN PATENT APPLICATION

(11) **EP 4 593 110 A1**
(43) Date of publication of application: **30.07.2025**
(21) Application number: 24223635.4
(22) Date of filing: 30.12.2024
(51) Int. Cl.: H01M 4/36, H01M 4/131, C01G 53/50, H01M 4/505, H01M 4/525, H01M 4/62, H01M 10/0525

(54) **POSITIVE ELECTRODE ACTIVE MATERIALS, POSITIVE ELECTRODES, AND RECHARGEABLE LITHIUM BATTERIES**

(30) Priority: 04.01.2024 KR 20240001652
(71) Applicant: SAMSUNG SDI CO., LTD., Yongin-si, Gyeonggi-do 17084 (KR)
(72) Inventor: JUN, Dowook, 17084 Yongin-si (KR); KIM, Young-Ki, 17084 Yongin-si (KR); KONG, Youngsun, 17084 Yongin-si (KR); CHOO, Sung Ho, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Gwiwoon, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

A rechargeable lithium battery including a positive electrode, itself including a positive electrode active material is disclosed. The positive electrode active material includes: (1) a first positive electrode active material including a layered lithium nickel-manganese-based composite oxide and being in a form of secondary particles, the secondary particles including a plurality of primary particles, with an average particle diameter (D₅₀) of the secondary particles being about 10 µm to about 25 µm; and (2) a second positive electrode active material including a layered lithium nickel-cobalt-based composite oxide and being in a form of single particles, with an average particle diameter (D₅₀) of the single particles being about 0.5 µm to about 8 µm.

## Description

### BACKGROUND

### 1. Field

Embodiments of the present disclosure described herein are related to positive electrode active materials, positive electrodes including the positive electrode active materials, and rechargeable lithium batteries including the positive electrodes.

### 2. Description of the Related Art

Portable information devices (such as cell phones, laptops, smart phones, and/or the like) and/or electric vehicles have utilized rechargeable lithium batteries due to their relatively high energy density and portability as a driving power source. Recently, research has been actively conducted to use a rechargeable lithium battery with high energy density as a driving power source for hybrid or electric vehicles as well as a power storage power source for energy storage systems or power walls.

Various positive electrode active materials have been investigated for use in rechargeable lithium batteries. For example, lithium nickel-based oxide, lithium nickel-manganese-cobalt composite oxide, lithium nickel-cobalt-aluminium composite oxide, and lithium cobalt oxide have been used as positive electrode active materials. However, with the increasing demand for large-sized, high-capacity, or high-energy-density rechargeable lithium batteries, the supply of cobalt, a rare metal used in these active materials, is expected to be severely limited. Consequently, there is a need or desire to develop positive active materials that either exclude cobalt or substantially reduce its content due to its high cost and limited reserves.

### SUMMARY

One or more embodiments of the invention are directed toward a positive electrode active material with high energy density, excellent or suitable cycle-life characteristics under high-voltage operating conditions, and excellent or suitable high-temperature storage characteristics. That is, the positive electrode active material has high capacity and energy density per volume, excellent or suitable initial charge/discharge efficiency, and cycle-life characteristics under high voltage conditions, and excellent or suitable high-temperature storage characteristics.

Additional aspects of the invention will be set forth in part in the description which follows and, in part, will be apparent from the description, or may be learned by practice of the presented embodiments of the present disclosure.

In one or more embodiments, a positive electrode active material includes a first positive electrode active material that includes a layered lithium nickel-manganese-based composite oxide and includes (e.g., is in a form of) secondary particles (e.g., each) formed by agglomerating a plurality of primary particles, and an average particle diameter (D₅₀) of the secondary particles is about 10 µm to about 25 µm, and a second positive electrode active material that includes a layered lithium nickel-cobalt-based composite oxide and includes (e.g., is in a form of) single particles (e.g., each being a monolithic particle), and an average particle diameter (D₅₀) of the single particles is about 0.5 µm to about 8 µm.

In one or more embodiments, a positive electrode includes a positive electrode current collector and a positive electrode active material layer on the positive electrode current collector, wherein the positive electrode active material layer includes the aforementioned positive electrode active material.

In one or more embodiments, a rechargeable lithium battery includes the aforementioned positive electrode, a negative electrode, and an electrolyte.

At least some of the above and other features of the invention are set out in the claims.

### BRIEF DESCRIPTION OF THE DRAWINGS

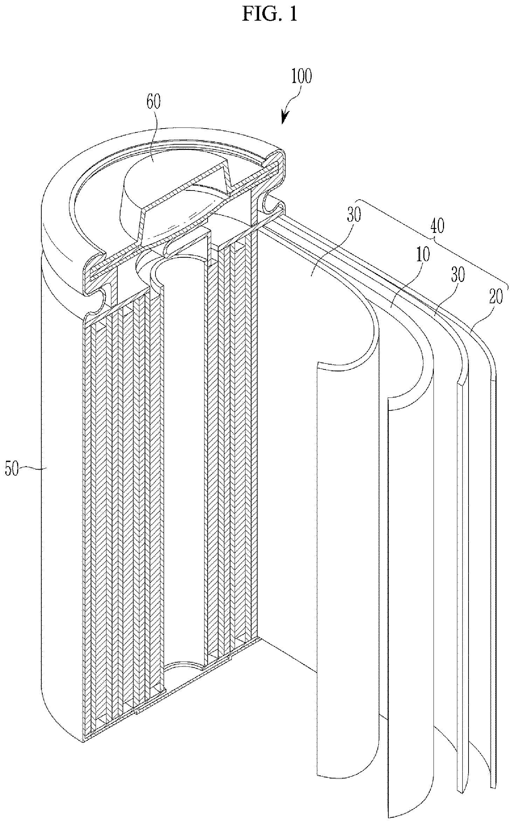

FIGS. 1-4 are schematic diagrams each showing a rechargeable lithium battery according to one or more embodiments.

### DETAILED DESCRIPTION

Hereinafter, one or more embodiments will be described in more detail so that those of ordinary skill in the art can more easily implement them. However, the present disclosure may be embodied in many different forms and is not construed as being limited to one or more embodiments set forth herein.

As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The terminology used herein is used to describe embodiments only, and is not intended to limit the scope of the present disclosure. The singular expression includes the plural expression unless the context clearly dictates otherwise.

As used herein, "combination thereof" refers to a mixture, a laminate, a composite, a copolymer, an alloy, a blend, a reaction product, and/or the like of the constituents.

Herein, it should be understood that terms such as "comprises", "includes", or "have" are intended to designate the presence of an embodied feature, number, step (e.g., act or task), element, and/or a (e.g., any suitable) combination thereof, but it does not preclude the possibility of the presence or addition of one or more other features, number, step (e.g., act or task), element, and/or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In addition, "layer" herein includes not only a shape formed on the whole surface if (e.g., when) viewed from a plan view, but also a shape formed on a partial surface.

In the present disclosure, when particles are spherical, "diameter" indicates a particle diameter or an average particle diameter, and when the particles are non-spherical, the "diameter" indicates a major axis length or an average major axis length. The average particle diameter may be measured by a method suitable to those skilled in the art, for example, by a particle size analyzer, or by a transmission electron microscope image or a scanning electron microscope image. In one or more embodiments, it is possible to obtain an average particle diameter value by measuring using a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

### Positive Electrode Active Material

In one or more embodiments, a positive electrode active material includes a first positive electrode active material that includes a layered lithium nickel-manganese-based composite oxide and includes (e.g., is in a form of) secondary particles formed by agglomerating a plurality of primary particles, and an average particle diameter (D₅₀) of the secondary particles is about 10 µm to about 25 µm, and a second positive electrode active material that includes a layered lithium nickel-cobalt-based composite oxide and includes (e.g., is in a form of) single particles, and an average particle diameter (D₅₀) of the single particles is about 0.5 µm to about 8 µm.

The positive electrode active material may have or achieve high density characteristics and thus may have high capacity per volume and high energy density and exhibit excellent or suitable characteristics at a high voltage. Because this positive electrode active material is low-cost and satisfies high-capacity, high-voltage, and high-density characteristics, a rechargeable lithium battery to which this positive electrode active material is applied may be mounted on an electric vehicle or a hybrid vehicle, and may enable long-distance driving of the electric vehicle or hybrid vehicle.

Based on about 100 wt% of a total of the first and second positive electrode active materials, the first positive electrode active material may be included in an amount of about 60 wt% to about 95 wt%, for example, about 70 wt% to about 90 wt%, and the second positive electrode active material may be included in an amount of about 5 wt% to about 40 wt%, for example, about 10 wt% to about 30 wt%. If the first and second positive electrode active materials are mixed within the ratios, energy density may be maximized or increased, and cycle-life characteristics and high-temperature storage characteristics at a high voltage may be improved.

### First Positive Electrode Active Material

As the price of cobalt, a rare metal, increases, there is a demand for the development of positive electrode active materials that exclude cobalt (e.g., not include cobalt) or reduce its content (e.g., amount). For example, a positive electrode active material having an olivine crystal structure such as lithium iron phosphate (LFP), lithium manganese phosphate (LMP), lithium manganese iron phosphate (LMFP), and/or the like or a spinel crystal structure such as lithium manganese oxide (LMO) and/or the like is limited in its ability to perform at high capacity due to a small available lithium amount within the structure. The layered lithium nickel-manganese-based positive electrode active material has excellent or suitable capacity and efficiency characteristics due to the high available lithium amount in the structure, making it suitable as a material for high-capacity batteries. However, as cobalt, which plays a key role in the layered structure, is removed, structural stability decreases, resistance increases, and it becomes more difficult to secure long cycle-life characteristics. In addition, the layered lithium nickel-manganese-based positive electrode active material, from which cobalt is excluded (e.g., not included), may have a problem of an accelerated side reaction with an electrolyte under high-voltage and high-temperature conditions, which may result in increasing gas generation and deteriorating cycle-life characteristics.

Accordingly, in one or more embodiments, a method of improving the capacity and cycle-life characteristics of the first positive electrode active material at high voltage may include appropriately or suitably adjusting a ratio of nickel and manganese in the lithium nickel-manganese-based composite oxide, introducing other elements such as aluminium in addition to nickel and manganese, or introducing a substantially uniform coating layer by applying an appropriate or suitable coating method.

The first positive electrode active material includes a layered lithium nickel-manganese-based composite oxide, and includes (e.g., is in the form of) secondary particles (e.g., each) made by agglomerating a plurality of primary particles, and the average particle diameter (D₅₀) of the secondary particles is about 10 µm to about 25 µm. The first positive electrode active material can be expressed as large particles.

The average particle diameter (D₅₀) of the secondary particles may be, for example, about 10 µm to about 20 µm, about 10 µm to about 18 µm, or about 12 µm to about 16 µm. Herein, an average particle diameter (D₅₀) refers to a diameter of particles having a cumulative volume of 50 volume% in the particle size distribution that is obtained by measuring the size (diameter or major axis length) of about 20 particles at random in a scanning electron microscope image for positive electrode active materials.

The shape of the secondary particles may be, for example, a spherical shape, an ellipsoidal shape, a polygonal shape, an irregular shape, and/or a (e.g., any suitable) combination thereof. Herein, the polygonal shape refers to a three-dimensional figure with multiple angles, such as polygonal prisms, polygonal pyramids, and polygonal pyramids. The shape of the primary particles constituting the secondary particles may be, for example, a spherical shape, an ellipsoidal shape, a polygonal shape, a plate shape (e.g., in a form of plates), a needle shape, an irregular shape, and/or a (e.g., any suitable) combination thereof.

In the lithium nickel-manganese-based composite oxide, a nickel content (e.g., amount) may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal (e.g., total metals) excluding lithium. If the nickel content (e.g., amount) satisfies the above ranges, high capacity may be achieved and structural stability may be increased even if the cobalt content (e.g., amount) is reduced.

A manganese content (e.g., amount) may be greater than or equal to about 10 mol%, for example, greater than or equal to about 15 mol%, for example about 15 mol% to about 40 mol%, about 15 mol% to about 35 mol%, about 15 mol% to about 30 mol%, or about 20 mol% to about 30 mol% based on 100 mol% of a total metal (e.g., total metals) excluding lithium (e.g., not including lithium) in the layered lithium nickel-manganese-based composite oxide. If the manganese content (e.g., amount) satisfies the above ranges, the positive electrode active material may improve structural stability while achieving or having high capacity.

The layered lithium nickel-manganese-based composite oxide may be a lithium nickel-manganese-aluminium-based composite oxide that further includes aluminium in addition to nickel and manganese. If the composite oxide contains aluminium, it is advantageous to maintain a stable layered structure even if the cobalt element is excluded (e.g., not included) from the structure. An aluminium content (e.g., amount) based on 100 mol% of the lithium nickel-manganese-aluminium-based composite oxide may be greater than 0 mol% and less than or equal to about 3 mol%, greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol%. If the aluminium content (e.g., amount) satisfies the above ranges, a stable layered structure may be maintained even if cobalt is excluded (e.g., not included), the problem of structure collapse due to charging and discharging may be suppressed or reduced, and long cycle-life characteristics of the positive electrode active material may be achieved.

According to one or more embodiments, the concentration of aluminium within the particles including the lithium nickel-manganese-based composite oxide may be substantially uniform. For example, 'substantially uniform' means that there is no significant concentration gradient of aluminium from the centre to the surface within a particle. In other words, the aluminium concentration in the inner portion of a particle is neither higher nor lower than in the outer portion, resulting in a substantially even distribution of aluminium throughout the particle. This may be a structure obtained by using an aluminium raw material during precursor production without additional doping of aluminium during the synthesis of the lithium nickel-manganese-based composite oxide and thereby synthesizing a composite oxide using nickel-manganese-aluminium-based hydroxide as a precursor. The particles may include (e.g., may be in a form of) a secondary particle in which a plurality of primary particles are agglomerated, and the aluminium content (e.g., amount) inside the primary particles may be the same or similar regardless of the location of the primary particles. For example, if a primary particle is selected at a random position in the cross-section of a secondary particle and the aluminium content (e.g., amount) is measured inside the primary particle rather than at its interface, regardless of the location of the primary particle, for example, whether the primary particle is close to the centre of the secondary particle or close to the surface, the aluminium content (e.g., amount) may be the same/similar/substantially uniform. In this structure, a stable layered structure can be maintained even if cobalt is absent or is present in a small (e.g., very small) amount, and aluminium by-products or aluminium aggregates are not generated, so that the capacity, efficiency, and cycle-life characteristics of the positive electrode active material can be improved at the same time.

The lithium nickel-manganese-based composite oxide may be represented by Chemical Formula 1:

Chemical Formula 1 Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.4, 0≤z1≤0.03, 0 ≤w1≤0.3, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S.

In Chemical Formula 1, for example, 0.9≤a1≤1.5, or 0.9≤a1≤1.2. In embodiments, Chemical Formula 1 may include aluminium, i.e. z1≠0, in which case 0.6 ≤x1≤0.8, 0.1≤y1≤0.39, 0.01≤z1≤0.03, and 0≤w1≤0.29, for example 0.6≤x1≤0.8, 0.1≤ y1≤0.39, 0.01<z1≤0.03, and 0≤w1≤0.29 may be satisfied.

In Chemical Formula 1, for example 0.6≤x1≤0.79, 0.6≤x1≤0.78, 0.6≤x1≤ 0.75, 0.65≤x1≤0.8, or 0.7≤x1≤0.79, 0.1≤y1≤0.35, 0.1≤y1≤0.30, 0.1≤y1≤0.29, 0.15≤ y1≤0.39, or 0.2≤y1≤0.3, 0.01≤z1≤0.025, 0.01<z1≤0.02, or 0.01<z1≤0.019, 0≤w1≤ 0.28, 0≤w1≤0.27, 0≤w1≤0.26, 0≤w1≤0.25, 0≤w1≤0.24, 0≤w1≤0.23, 0≤w1≤0.22, 0≤ w1≤0.21, 0≤w1≤0.2, 0≤w1≤0.15, 0≤w1≤0.1, or 0≤w1≤0.09.

For example, the lithium nickel-manganese-based composite oxide may not include (e.g., may exclude any) cobalt or may include a small (e.g., substantially small) amount of cobalt, and the cobalt content (e.g., amount) may be about 0 mol% to about 0.01 mol% based on 100 mol% of a total metal (e.g., total metals) excluding (e.g., not including) lithium.

### Coating Layer

The first positive electrode active material may include a core particle including a layered lithium nickel-manganese-based composite oxide, and a coating layer located on the surface of the core particle and including Al, B, Mg, Ti, V, W, Y, Zn, Zr, and/or a (e.g., any suitable) combination thereof.

The lithium nickel-manganese-based composite oxide is susceptible to chemical attacks from components in an electrolyte, if (e.g., when) a battery is operated under high-voltage or high-temperature conditions, and thus may have lots of side reactions with the electrolyte, resulting in increasing an amount of gas generation and thereby, deteriorating battery cycle-life and safety, but these problems may be solved by introducing a coating layer according to one or more embodiments, thereinto.

For example, the coating layer may be an Al coating layer including Al, and may optionally further include an element such as B, Mg, Ti, V, W, Y, Zn, and Zr. When an Al coating layer is introduced, the high voltage performance of the first positive electrode active material can be further improved.

Because a layered lithium nickel-manganese-based composite oxide may have significantly different residual lithium contents on the particle surface, and have one or more suitable characteristics that are different from oxides with a different composition, for example, a lithium nickel-cobalt-manganese-based composite oxide, a lithium nickel-cobalt-aluminium-based composite oxide, a lithium cobalt-based oxide, and/or the like, it is impossible to form a satisfactory coating layer in the form of a substantially uniform film in a comparable coating method. Accordingly, one or more embodiments may introduce a substantially uniform coating layer into the first positive electrode active material in a method of (i) adding a coating raw material to an aqueous solvent and mixing them to prepare a coating solution in which the salt is completely dissolved in a salt-solution method, (ii) adding core particles to the coating solution and mixing them to proceed with coating, and (iii) removing the solvent and then, performing drying and a heat treatment. This method is a salt-solution wet coating method and also, a pre-addition method of completely dissolving the salt, the coating raw material and then, adding the active material particles (i.e., the core particles). Through this method, a substantially uniform and thin coating layer may be successfully formed on the surface of the layered lithium nickel-manganese-based composite oxide.

According to the coating method, compared to a general dry method or a post-addition wet method, a coating element content (e.g., amount) may be further increased on the active material surface. For example, the coating content (e.g., amount) on the first positive electrode active material surface, if (e.g., when) measured through an energy-dispersive x-ray spectroscopy (EP-EDS) analysis, may be about 5 at% (atomic percent) to about 35 at%, for example, about 5 at% to about 30 at%, about 5 at% to about 25 at%, about 5 at% to about 20 at%, or about 10 at% to about 20 at% based on about 100 at% of total metals excluding lithium on the surface. Within the content (e.g., amount) ranges, the coating layer may effectively improve high voltage characteristics without increasing resistance of the first positive electrode active material.

The coating layer may include (e.g., may be in the form of) a film that continuously surrounds the surface of the core particle, for example, or may include (e.g., may be in the form of) a shell that surrounds the entire surface of the core particle. This is distinct from a structure in which only a portion of the surface of the core particle is partially coated. According to one or more embodiments, the coating layer may be formed to entirely cover the surface of the core particle and may be formed to be very thin and substantially uniform in thickness, and therefore the positive electrode active material does not increase resistance or decrease capacity, improves structural stability, effectively suppresses or reduces side reactions with electrolytes, reduces the amount of gas generated under high-voltage and high-temperature conditions, and achieves long cycle-life characteristics.

According to the method, the thickness of the coating layer of the first positive electrode active material may be about 5 nm to about 200 nm, for example about 5 nm to about 150 nm, about 5 nm to about 100 nm, about 5 nm to about 80 nm, about 5 nm to about 50 nm, or about 10 nm to about 50 nm. If the coating layer satisfies the thickness ranges, the structural stability of the positive electrode active material may be improved without increasing resistance or reducing capacity due to the coating, and the side reaction with the electrolyte may be effectively suppressed or reduced. The thickness of the coating layer may be measured through, for example, scanning electron microscopy (SEM), transmission electron microscopy (TEM), time-of-flight secondary ion mass spectrometry (TOF-SIMS), X-ray photoelectron spectroscopy (XPS), or EDS analysis, and for example, may be measured through EDS line profile analysis of the cross-section of the positive electrode active material.

The coating layer according to one or more embodiments may be characterized by being thin and substantially uniform in thickness, at the level of tens to hundreds of nanometers. For example, the deviation in coating layer thickness in one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges refers to that a coating layer of substantially uniform thickness is formed in a form of a good or suitable film on the surface of the positive electrode active material particle. Accordingly, the structural stability of the positive electrode active material is improved, side reactions with the electrolyte may be effectively suppressed or reduced, and the increase in resistance or decrease in capacity due to coating may be minimized or reduced.

For example, if an Al coating layer is introduced, an Al content (e.g., amount) of the coating layer may be about 0.1 mol% to about 3.0 mol%, for example, about 0.1 mol% to about 2.0 mol%, about 0.5 mol% to about 1.5 mol%, or about 0.7 mol% to about 1.3 mol% based on about 100 mol% of the total metals excluding (e.g., not including) lithium in the total first positive electrode active material.

If the Al coating layer is introduced, the coating layer may include, for example, a layered aluminium compound, for example, aluminium oxide, lithium-aluminium oxide, and/or a (e.g., any suitable) combination thereof, for example, LiAlO₂. For example, the first positive electrode active material may include a first coating layer containing aluminum located on the surface of the core particle, and a second coating layer containing zirconium located on the first coating layer.

Each content (e.g., amount) of coating elements (i.e., the coating layer component) based on about 100 mol% of the total metals (i.e., a total metal) excluding (e.g., not including) lithium in the total first positive electrode active material may vary depending on types (kinds) of the coating elements but may be about 0.01 mol% to about 5 mol%, for example, about 0.05 mol% to about 3 mol%, or about 0.1 mol% to about 2 mol%. For example, in one embodiment, in the first positive electrode active material, based on 100 mol% of total metals excluding lithium, a content of the coating elements of the coating layer is about 0.1 mol% to about 2 mol%. In other words, as further examples example, the content of the coating layer component in the first positive electrode active material, based on 100 mol% of the total metals excluding lithium, typically ranges from about 0.01 mol% to about 5 mol%, with specific examples being about 0.05 mol% to about 3 mol%, or about 0.1 mol% to about 2 mol%.

### Second Positive Electrode Active Material

The second positive electrode active material includes a layered lithium nickel-cobalt-based composite oxide, including (e.g., is in a form of) single particles, and has an average particle diameter (D₅₀) of about 0.5 µm to about 8 µm. The second positive electrode active material may be expressed as small particles.

Herein, the single particles may exist alone without a grain boundary within the particle, including (e.g., is composed of) one particle, and may be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal.

The average particle diameter (D₅₀) of the single particle may be, for example, about 0.5 µm to about 6 µm, about 1 µm to about 5 µm, or about 2 µm to about 4 µm. The shape of a single particle may be, for example, spherical, ellipsoidal, polygonal, irregular, and/or a (e.g., any suitable) combination thereof.

In the lithium nickel-cobalt-based composite oxide of the second positive electrode active material, a nickel content (e.g., amount) based on 100 mol% of a total metal (e.g., total metals) excluding (e.g., not including) lithium may be, for example, about 50 mol% to about 70 mol%, for example, about 55 mol% to about 70 mol%, or about 55 mol% to about 65 mol%. For example, the second positive electrode active material may be a mid-nickel positive electrode active material including about 50 mol% to about 70 mol% of nickel. When nickel in the second positive electrode active material satisfies the above content (e.g., amount) range, excellent or suitable cycle-life characteristics can be achieved under high voltage driving conditions where the upper limit charging voltage is greater than or equal to about 4.45 V. The mid-nickel second positive electrode active material can be described as a material for high voltage charging of greater than or equal to about 4.45V.

A nickel content (e.g., amount) based on 100 mol% of a total metal (e.g., total metals) excluding (e.g., not including) lithium in the lithium nickel-cobalt-based composite oxide of the second positive electrode active material may be less than the nickel content (e.g., amount) based on 100 mol% of a total metal (e.g., total metals) excluding (e.g., not including) lithium in the layered lithium nickel-manganese-based composite oxide of the first positive electrode active material, by, for example about 10 mol% to about 30 mol%, or about 15 mol% to about 20 mol%.

The lithium nickel-cobalt-based composite oxide may be represented by Chemical Formula 2, for example, and may be represented by Chemical Formula 3 as a specific example.

Chemical Formula 2 Liₐ₂Niₓ₂Co_{y2}M²_{z2}O_{2-b2}X_{b2}

In Chemical Formula 2, 0.9≤a2≤1.2, 0.5≤x2≤0.7, 0.1≤y2≤0.5, 0≤z2≤0.4, 0.9≤x2+y2+z2≤1.1, and 0≤b2≤0.1, M² is one or more elements selected from among Al, B, Ba, Ca, Ce, Cr, Cu, Fe, Mg, Mn, Mo, Nb, Si, Sn, Sr, Ti, V, W, Y, Zn, and Zr, and X is one or more elements selected from among F, P, and S.

Chemical Formula 3 Liₐ₃Niₓ₃Co_{y3}M³_{z3}M⁴_{w3}O_{2-b3}X_{b3}

In Chemical Formula 3, 0.9≤a3≤1.2, 0.5≤x3≤0.7, 0.1≤y3≤0.4, 0.1≤z3≤0.3, 0≤w3≤0.1, 0.9≤x3+y3+z3+w3≤1.1, and 0≤b3≤0.1, M³ is one or more elements selected from among Al, Mn, and/or a (e.g., any suitable) combination thereof, M⁴ is one or more elements selected from among B, Ba, Ca, Ce, Cr, Cu, Fe, Mg, Mo, Nb, Si, Sn, Sr, Ti, V, W, Y, Zn, and Zr, and X is one or more elements selected from among F, P, and S.

As an example, the second positive electrode active material may include core particles including a lithium nickel-cobalt-based composite oxide, and a coating layer located on the surface of the core particles. The coating layer may include, for example, Al, B, Co, Mg, Si, Ti, V, W, Zn, Zr, and/or a (e.g., any suitable) combination thereof. A content (e.g., amount) of the coating element based on 100 wt% of a total metal (e.g., total metals) excluding (e.g., not including) lithium in the second positive electrode active material may be about 0.1 wt% to about 5 wt%, about 0.1 wt% to about 3 wt%, about 0.1 wt% to about 2 wt%, about 0.1 wt% to about 1 wt%, or about 0.1 wt% to about 0.9 wt%.

### Positive Electrode

In one or more embodiments, a positive electrode for a rechargeable lithium battery including the aforementioned positive electrode active material is provided. For example, the positive electrode includes a positive electrode current collector and a positive electrode active material layer on the positive electrode current collector, and the positive electrode active material layer may include the aforementioned positive electrode active material, and may further include optionally a binder, a conductive material, and/or a (e.g., any suitable) combination thereof.

According to one or more embodiments, a loading level of the positive electrode active material layer may be about 10 mg/cm² to about 40 mg/cm², for example about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example about 3.3 g/cc to about 3.6 g/cc or about 3.4 g/cc to about 3.58 g/cc. When applying the positive electrode active material according to one or more embodiments, it is advantageous to implement such a loading level and positive electrode density, and a positive electrode that satisfies the loading level and positive electrode density in the above range is suitable for implementing a high-capacity, high-energy-density rechargeable lithium battery. The density of the positive electrode active material layer refers to the ratio of the weight to the volume of the pressed positive active material layer. The density of the positive electrode active material layer can be measured by measuring a cross-sectional area, thickness and weight of the positive active material layer excluding the positive electrode current collector, calculating the volume by multiplying the cross-sectional area and the thickness, and dividing the weight by the volume.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material (e.g., electron conductor) is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include Al, but the present disclosure is not limited thereto.

### Rechargeable Lithium Battery

One or more embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

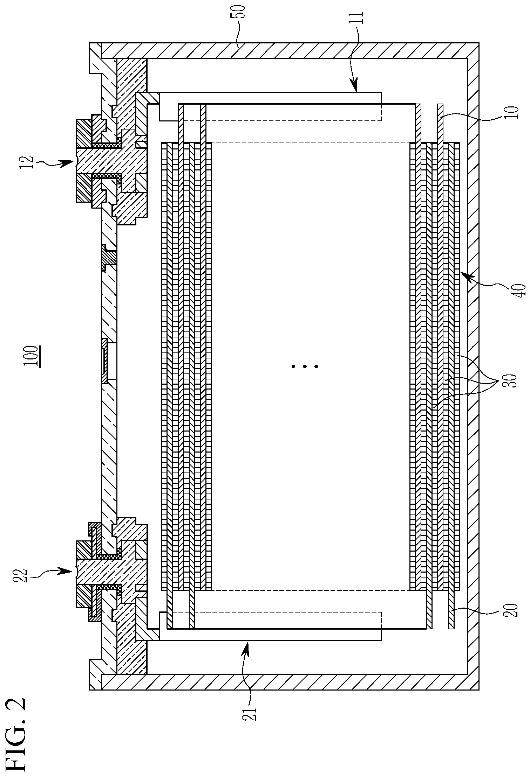

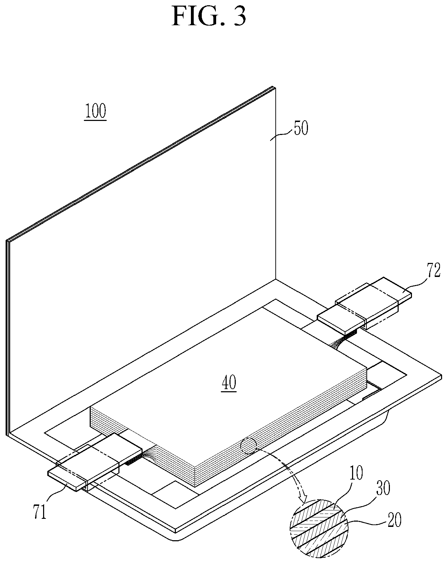

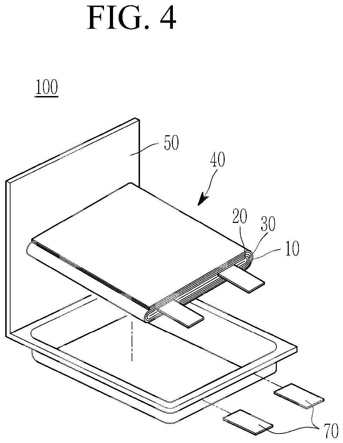

The rechargeable lithium battery may be classified into cylindrical, prismatic, pouch, coin, and/or the like. depending on the shape. FIGS. 1 to 4 are schematic diagrams each showing the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, for example, a positive electrode tab 71 and a negative electrode tab 72 serving as an electrical path for inducing the current formed in the electrode assembly 40 to the outside.

The rechargeable lithium battery according to one or more embodiments may be rechargeable at a high voltage or may be suitable for being driven at a high voltage. For example, the charging limit voltage of a rechargeable lithium battery may be greater than or equal to about 4.45 V, about 4.45 V to about 4.7 V, about 4.45 V to about 4.6 V, or about 4.45 V to about 4.55 V, and/or the like. By applying the positive electrode active material according to one or more embodiments, the rechargeable lithium battery can significantly reduce an amount of gas generated even if (e.g., when) charged at high voltage and can achieve high capacity and long cycle-life characteristics.

### Negative Electrode

The negative electrode may include a current collector and a negative electrode active material layer on the current collector, and the negative electrode active material layer may further include a negative electrode active material, a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, SnOx (0 < x ≤ 2), e.g., SnO₂, a Sn alloy, and/or a (e.g., any suitable) combination thereof.

The silicon-carbon composite may be a composite of silicon and amorphous carbon. An average particle diameter (D₅₀) of the silicon-carbon composite particles may be, for example, about 0.5 µm to about 20 µm. According to one or more embodiments, the silicon-carbon composite may include (e.g., be in the form of) silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

When the silicon-carbon composite includes silicon and amorphous carbon, a silicon content (e.g., amount) may be about 10 wt% to about 50 wt% and a content (e.g., amount) of amorphous carbon may be about 50 wt% to about 90 wt% based on 100 wt% of the silicon-carbon composite. In addition, if (e.g., when) the composite includes silicon, amorphous carbon, and crystalline carbon, a silicon content (e.g., amount) may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x<2). For example, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material (e.g., electron conductor) is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte that includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g., when) two or more types (kinds) are used in a mixture, a mixing ratio can be appropriately or suitably adjusted according to the desired or suitable battery performance, which is suitable to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinyl ethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte has appropriate or suitable ionic conductivity and viscosity, and thus excellent or suitable performance can be achieved and lithium ions can move effectively.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail herein. However, the following examples are only examples of the present disclosure, and the present disclosure is not limited to the following examples.

### Example 1

### 1. Preparation of Positive Electrode Active Material

### (1) Preparation of First Positive Electrode Active Material

Ni_{0.75}Mn_{0.23}Al_{0.02}(OH)₂ and LiOH were mixed to have a molar ratio of Li/(Ni+Mn+Al)=1.05 and then, primarily heat-treated at 845 °C for 8 hours under an oxygen atmosphere to prepare first lithium nickel-manganese-based composite oxide having a composition of Li_{1.05}Ni_{0.75}Mn_{0.23}Al_{0.02}O₂ in the form of secondary particles with an average particle diameter (D₅₀) of about 14 µm.

A coating solution was prepared by adding aluminium sulfate to a distilled water solvent and then, stirring the mixture for about 5 minutes at about 350 rpm. It was confirmed that the salt was completely dissolved in the coating solution, which was colorless and transparent. While continuously stirring the coating solution, 500 g of the first lithium nickel-manganese-based composite oxide was added thereto for 1.5 minutes and then, stirred for about 45 minutes. Herein, an aluminium content (e.g., amount) of the aluminium sulfate was designed to be 1.0 mol% based on 100 mol% of the total metals excluding lithium in the first positive electrode active material. After removing the solvent from the mixed solution by using an aspirator and a filter press, vacuum-drying was performed at 190 °C.

After adding zirconium oxide to the dried product, a second heat treatment was performed at 825 °C for 8 hours under an oxygen atmosphere to prepare a first positive electrode active material. A zirconium content (e.g., amount) of the zirconium oxide was designed to be 0.2 mol% based on 100 mol% of the total metals excluding lithium in the final first positive electrode active material.

### (2) Preparation of Second Positive Electrode Active Material

Ni_{0.6}Co_{0.1}Mn_{0.3}(OH)₂ and LiOH were mixed to have a molar ratio of Li/(Ni+Co+Mn)=1.05, and a first heat treatment was performed under an oxygen atmosphere at 930 °C for 8 hours. The obtained mixture was pulverized through an airflow impact mill to prepare lithium nickel-cobalt-based composite oxide (Li_{1.05}Ni_{0.6}Co_{0.1}Mn_{0.3}O₂) in the form of single particles with an average particle diameter (D₅₀) of about 3.5 µm.

### (3) Preparation of Mixed Positive Electrode Active Material

The first positive electrode active material and the second positive electrode active material were mixed in a weight ratio of 90:10 to prepare a final positive electrode active material.

In summary, the preparation of the positive electrode active material involved three main steps (e.g., acts or tasks): first, creating a lithium nickel-manganese-based composite oxide by mixing Ni_{0.75}Mn_{0.23}Al_{0.02}(OH)₂ and LiOH, heat-treating, coating with aluminium sulfate, and adding zirconium oxide; second, preparing a lithium nickel-cobalt-based composite oxide by mixing Ni_{0.6}Co_{0.1}Mn_{0.3}(OH)₂ and LiOH, heat-treating, and pulverizing; and finally, mixing the two resulting materials in a 90:10 weight ratio to form the final positive electrode active material.

### 2. Manufacturing of Rechargeable Lithium Battery Cell

96 wt% of the positive electrode active material, 2 wt% of a polyvinylidene fluoride binder, and 2 wt% of a carbon nanotube conductive material were mixed to prepare positive electrode active material layer slurry, and the slurry was coated on an aluminium foil current collector and then, dried and compressed to manufacture a positive electrode.

Between the positive electrode and a lithium metal counter electrode, a polytetrafluoroethylene separator was arranged to manufacture an electrode assembly, and after inserting the electrode assembly into a battery case, an electrolyte solution prepared by dissolving 1 M LiPF₆ in a mixed solvent of ethylene carbonate and dimethyl carbonate in a volume ratio of 3:7 was injected thereinto, manufacturing a rechargeable lithium battery cell (half-cell) in a common method.

### Example 2

A positive electrode active material and a rechargeable lithium battery cell were manufactured in substantially the same manner as in Example 1 except that the first positive electrode active material and the second positive electrode active material were mixed in a weight ratio of 80:20 to prepare the final positive electrode active material.

### Example 3

A positive electrode active material and a rechargeable lithium battery cell were manufactured in substantially the same manner as in Example 1 except that the first positive electrode active material and the second positive electrode active material were mixed in a weight ratio of 70:30 to prepare the final positive electrode active material.

### Example 4

A positive electrode active material and a rechargeable lithium battery cell were manufactured in substantially the same manner as in Example 1 except that the first positive electrode active material and the second positive electrode active material were mixed in a weight ratio of 60:40 to prepare the final positive electrode active material.

### Comparative Example 1

A positive electrode active material and a rechargeable lithium battery cell were manufactured in substantially the same manner as in Example 1 except that the first positive electrode active material alone was used as the positive electrode active material.

### Comparative Example 2

A positive electrode active material and a rechargeable lithium battery cell were manufactured in substantially the same manner as in Example 1 except that second positive electrode active material alone was used as the positive electrode active material.

Each of the positive electrode active materials of Examples 1 to 4 and Comparative Examples 1 to 2 was measured with respect to pellet density, which is shown as P/D in Table 1. The pellet density was obtained by putting 3 g of each of the positive electrode active materials in a mold (an area: 1.298 cm²), slowly inserting a mold bar into a mold main body, and placing the mold set in a hydraulic press and pressing it at a pressure of 3 tons for 30 seconds to measure a height.

### Evaluation Example 1: Evaluation of Initial Charge and Discharge Capacity, Efficiency, and Cycle-life Characteristics

The rechargeable lithium battery cells of Examples 1 to 4 and Comparative Examples 1 to 2 were charged to 4.45 V at a constant current of 0.2 C and to 0.05 C at the constant voltage and then, discharged to 3.0 V at 0.2 C at 25 °C to proceed with initial charge and discharge. In Table 1, initial charge capacity and initial discharge capacity were provided, and a ratio of the latter to the former was shown as initial charge and discharge efficiency in Table 1. In addition, the initial discharge capacity was multiplied by the pellet density and then, presented as capacity per volume in Table 1.

Subsequently, the cells were 50 times charged and discharged at 1.0 C within a voltage range of 3.0 V to 4.45 V at 45 °C. In Table 1, a ratio of 50^{th} discharge capacity to the initial discharge capacity is shown as a cycle-life.

### Evaluation Example 2: Evaluation of High-temperature Storage Characteristics

The battery cells, which were initially charged to 4.45 V in Evaluation Example 1, were stored at 90 °C for 24 hours and then, measured with respect to a gas generation amount, and the results are shown in Table 1.

**Table 1**

| | First positive electrod e active material | Second positive electrod e active material | PD (g/cc) | Charge (mAh/g ) | Disch arge (mAh /g) | Effici ency (%) | Capac ity per volum e (mAh /cc) | Cycle -life (%) | Gas genera tion amoun t (mL/g) |
|---|---|---|---|---|---|---|---|---|---|
| Ex. 1 | 90 wt% | 10 wt% | 3.29 | 227.1 | 191.9 | 84.5 | 631.4 | 93.4 | 10.8 |
| Ex. 2 | 80 wt% | 20 wt% | 3.42 | 225.9 | 190.2 | 84.2 | 650.5 | 94.3 | 9.6 |
| Ex. 3 | 70 wt% | 30 wt% | 3.53 | 224.8 | 187.9 | 83.6 | 663.3 | 95.6 | 8.4 |
| Ex. 4 | 60 wt% | 40 wt% | 3.55 | 224.1 | 186.5 | 83.2 | 662.1 | 96.3 | 7.4 |
| Com p. Ex. 1 | 100 wt% | - | 3.12 | 228.3 | 193.2 | 84.6 | 602.8 | 92.5 | 12.1 |
| Com p. Ex. 2 | - | 100 wt% | 2.98 | 219.7 | 194.0 | 88.3 | 578.1 | 97.0 | 5.2 |

Referring to Table 1, the positive electrode active materials of Examples 1 to 4 all exhibited pellet density of 3.29 g/cc or more, and the rechargeable lithium battery cells of Examples 1 to 4 exhibited improved capacity per volume, compared to the cells of the comparative examples, and also, maintained excellent or suitable cycle-life characteristics. In addition, the cells of Examples 1 to 4 exhibited low gas generation amounts in the high-temperature storage evaluation.

Comparative Example 1, to which the first positive electrode active material alone was applied, exhibited high initial discharge capacity per weight but a decrease in capacity per volume due to a decrease in pellet density of the positive electrode active material, which was confirmed to be disadvantageous in terms of energy density, compared to Examples 1 to 4.

Comparative Example 1, compared to Examples 1 to 4, exhibited slightly deteriorated cycle-life characteristics and a much higher gas generation amount if (e.g., when) stored at a high temperature.

Comparative Example 2, to which the second positive electrode active material alone was applied, exhibited high initial discharge capacity per weight but significantly deteriorated capacity per volume due to a significant decrease in capacity of the positive electrode active material, which was disadvantageous in terms of energy density, compared to Examples 1 to 4.

A person of ordinary skill in the art would appreciate, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the context of the present application and unless otherwise defined, the terms "use," "using," and "used" may be considered synonymous with the terms "utilize," "utilizing," and "utilized," respectively.

Further, the use of "may" when describing embodiments of the inventive concept refers to "one or more embodiments of the inventive concept." Also, the term "exemplary" is intended to refer to an example or illustration.

As used herein, the singular forms "a", "an" and "the" are intended to include the plural forms as well, unless the context clearly indicates otherwise. I

A battery manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory, which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this invention has been described in connection with what is presently considered to be practical example embodiments, it is to be understood that present disclosure is not limited to the disclosed embodiments. In contrast, it is intended to cover one or more suitable modifications and equivalent arrangements included within the scope of the appended claims.

Embodiments are set out in the following clauses:
Clause 1. A positive electrode active material comprising: (a) a first positive electrode active material comprising a layered lithium nickel-manganese-based composite oxide and is in a form of secondary particles, the secondary particles each comprising a plurality of primary particles, and an average particle diameter (D₅₀) of the secondary particles is 10 µm to 25 µm, and (b) a second positive electrode active material comprising a layered lithium nickel-cobalt-based composite oxide and is in a form of single particles, and an average particle diameter (D₅₀) of the single particles is 0.5 µm to 8 µm.
Clause 2. The positive electrode active material of Clause 1, wherein the first positive electrode active material is in an amount of 60 wt% to 95 wt% and the second positive electrode active material is in an amount of 5 wt% to 40 wt%, based on a total of 100 wt% of the first and second positive electrode active materials.
Clause 3. The positive electrode active material of Clause 1 or Clause 2, wherein the layered lithium nickel-manganese-based composite oxide of the first positive electrode active material has a nickel content of 60 mol% to 80 mol% and a manganese content of greater than or equal to 15 mol% based on 100 mol% of the total metals excluding lithium.
Clause 4. The positive electrode active material of any preceding Clause, wherein the layered lithium nickel-manganese-based composite oxide of the first positive electrode active material further comprises aluminium, and an aluminium content based on 100 mol% of the total metals excluding lithium is 1 mol% to 3 mol%.
Clause 5. The positive electrode active material of Clause 4, wherein a concentration of aluminium in the layered lithium nickel-manganese-based composite oxide of the first positive electrode active material is substantially uniform.
Clause 6. The positive electrode active material of any preceding Clause, wherein a cobalt content in the layered lithium nickel-manganese-based composite oxide of the first positive electrode active material is 0 mol% to 0.01 mol% based on 100 mol% of the total metals excluding lithium.
Clause 7. The positive electrode active material of any preceding Clause, wherein the layered lithium nickel-manganese-based composite oxide of the first positive electrode active material is represented by Chemical Formula 1:

   Chemical Formula 1 Liₐ₁Niₓ₁Mn_{y1}Al_{z1}M¹_{w1}O_{2-b1}X_{b1}

   and wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S.
Clause 8. The positive electrode active material of any preceding Clause, wherein the first positive electrode active material comprises a core particle comprising a layered lithium nickel-manganese-based composite oxide, and a coating layer on a surface of the core particle and comprising Al, B, Mg, Ti, V, W, Y, Zn, Zr, or a combination thereof.
Clause 9. The positive electrode active material of Clause 8, wherein the coating layer comprises Al and is in a form of a shell that continuously surrounds the surface of the core particle.
Clause 10. The positive electrode active material of Clause 8 or Clause 9, wherein the coating layer has a thickness of 5 nm to 200 nm.
Clause 11. The positive electrode active material of any of Clauses 8, 9 or 10, wherein in the first positive electrode active material, based on 100 mol% of the total metals excluding lithium, a content of the coating layer is 0.1 mol% to 2 mol%.
Clause 12. The positive electrode active material of any preceding Clause, wherein, a nickel content in the lithium nickel-cobalt-based composite oxide of the second positive electrode active material is 50 mol% to 70 mol% based on 100 mol% of the total metals excluding lithium.
Clause 13. The positive electrode active material of Clause 12, wherein the second positive electrode active material is for high voltage charging of greater than or equal to 4.45V.
Clause 14. The positive electrode active material of any preceding Clause, wherein a nickel content in the lithium nickel-cobalt-based composite oxide of the second positive electrode active material, based on 100 mol% of the total metals excluding lithium, is less than a nickel content in the layered lithium nickel-manganese-based composite oxide of the first positive electrode active material, also based on 100 mol% of the total metals excluding lithium.
Clause 15. The positive electrode active material of any preceding Clause, wherein the lithium nickel-cobalt-based composite oxide of the second positive electrode active material is represented by Chemical Formula 2:

   Chemical Formula 2 Liₐ₂Niₓ₂Co_{y2}M²_{z2}O_{2-b2}X_{b2}

   and wherein in Chemical Formula 2, 0.9≤a2≤1.2, 0.5≤x2≤0.7, 0.1≤y2≤0.5, 0≤z2≤0.4, 0.9≤x2+y2+z2≤1.1, and 0≤b2≤0.1, M² is one or more elements selected from among Al, B, Ba, Ca, Ce, Cr, Cu, Fe, Mg, Mn, Mo, Nb, Si, Sn, Sr, Ti, V, W, Y, Zn, and Zr, and X is one or more elements selected from among F, P, and S.
Clause 16. A positive electrode comprising: (a) a positive electrode current collector; and (b) a positive electrode active material layer on the positive electrode current collector, wherein the positive electrode active material layer comprises the positive electrode active material of any of Clauses 1 to 15.
Clause 17. The positive electrode of Clause 16, wherein the positive electrode active material layer has a loading level of 10 mg/cm² to 40 mg/cm².
Clause 18. The positive electrode of Clause 16 or Clause 17, wherein the positive electrode active material layer has a density of 3.3 g/cc to 3.7 g/cc.
Clause 19. A rechargeable lithium battery, comprising: (a) the positive electrode of any of Clauses 16 to 18; (b) a negative electrode; and (c) an electrolyte.
Clause 20. The rechargeable lithium battery of Clause 19, wherein a charging limit voltage of the rechargeable lithium battery is greater than or equal to about 4.45 V.

**Reference Numerals**

| | | | |
|---|---|---|---|
| 100: | rechargeable lithium b attery | 10: | positive electrode |
| 11: | positive electrode lead t ab | 12: | positive electrode terminal |
| 20: | negative electrode | 21: | negative electrode lead tab |
| 22: | negative electrode termir nal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising:
a first positive electrode active material comprising a layered lithium nickel-manganese-based composite oxide and is in a form of secondary particles, the secondary particles each comprising a plurality of primary particles, and an average particle diameter (D₅₀) of the secondary particles is 10 µm to 25 µm, and
a second positive electrode active material comprising a layered lithium nickel-cobalt-based composite oxide and is in a form of single particles, and an average particle diameter (D₅₀) of the single particles is 0.5 µm to 8 µm.

2. The positive electrode active material as claimed in claim 1, wherein
the first positive electrode active material is in an amount of 60 wt% to 95 wt% and the second positive electrode active material is in an amount of 5 wt% to 40 wt%, based on a total of 100 wt% of the first and second positive electrode active materials.

3. The positive electrode active material as claimed in claim 1 or claim 2, wherein
the layered lithium nickel-manganese-based composite oxide of the first positive electrode active material has a nickel content of 60 mol% to 80 mol% and a manganese content of greater than or equal to 10 mol% based on 100 mol% of the total metals excluding lithium.

4. The positive electrode active material as claimed in any preceding claim, wherein
the layered lithium nickel-manganese-based composite oxide of the first positive electrode active material further comprises aluminium, and an aluminium content based on 100 mol% of the total metals excluding lithium is 1 mol% to 3 mol%, optionally wherein
a concentration of aluminium in the layered lithium nickel-manganese-based composite oxide of the first positive electrode active material is substantially uniform.

5. The positive electrode active material as claimed in any preceding claim, wherein
a cobalt content in the layered lithium nickel-manganese-based composite oxide of the first positive electrode active material is 0 mol% to 0.01 mol% based on 100 mol% of the total metals excluding lithium.

6. The positive electrode active material as claimed in any preceding claim, wherein
the layered lithium nickel-manganese-based composite oxide of the first positive electrode active material is represented by Chemical Formula 1:
Chemical Formula 1 Liₐ₁Niₓ₁Mn_{y1}Al_{z1}M¹_{w1}O_{2-b1}X_{b1}, and
wherein, in Chemical Formula 1, 0.9≤a1≤1.8, 0.6≤x1≤0.8, 0.1≤y1≤0.4, 0≤z1≤ 0.03, 0≤w1≤0.3, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S.

7. The positive electrode active material as claimed in any preceding claim, wherein
the first positive electrode active material comprises a core particle comprising a layered lithium nickel-manganese-based composite oxide, and
a coating layer on a surface of the core particle and comprising Al, B, Mg, Ti, V, W, Y, Zn, Zr, or a combination thereof, optionally wherein
the coating layer comprises Al and is in a form of a shell that continuously surrounds the surface of the core particle.

8. The positive electrode active material as claimed in claim 7, wherein
(i) the coating layer has a thickness of 5 nm to 200 nm, and/or
(ii) in the first positive electrode active material, based on 100 mol% of the total metals excluding lithium, a content of the coating layer is 0.01 mol% to 5 mol%.

9. The positive electrode active material as claimed in any preceding claim, wherein, a nickel content in the layered lithium nickel-cobalt-based composite oxide of the second positive electrode active material is 50 mol% to 70 mol% based on 100 mol% of the total metals excluding lithium, optionally wherein
the second positive electrode active material is for high voltage charging of greater than or equal to 4.45V.

10. The positive electrode active material as claimed in any preceding claim, wherein
a nickel content in the layered lithium nickel-cobalt-based composite oxide of the second positive electrode active material, based on 100 mol% of the total metals excluding lithium, is less than a nickel content in the layered lithium nickel-manganese-based composite oxide of the first positive electrode active, also material based on 100 mol% of the total metals excluding lithium.

11. The positive electrode active material as claimed in any preceding claim, wherein
the lithium nickel-cobalt-based composite oxide of the second positive electrode active material is represented by Chemical Formula 2:
Chemical Formula 2 Liₐ₂Niₓ₂Co_{y2}M²_{z2}O_{2-b2}X_{b2}
wherein in Chemical Formula 2, 0.9≤a2≤1.2, 0.5≤x2≤0.7, 0.1≤y2≤0.5, 0≤z2≤ 0.4, 0.9≤x2+y2+z2≤1.1, and 0≤b2≤0.1, M² is one or more element selected from among Al, B, Ba, Ca, Ce, Cr, Cu, Fe, Mg, Mn, Mo, Nb, Si, Sn, Sr, Ti, V, W, Y, Zn, and Zr, and X is one or more elements selected from among F, P, and S.

12. A positive electrode comprising:
a positive electrode current collector; and
a positive electrode active material layer on the positive electrode current collector,
wherein the positive electrode active material layer comprises the positive electrode active material as claimed in any of claims 1 to 11.

13. The positive electrode as claimed in claim 12, wherein
(i) the positive electrode active material layer has a loading level of 10 mg/cm² to 40 mg/cm², and/or
(ii) the positive electrode active material layer has a density of 3.3 g/cc to 3.7 g/cc.

14. A rechargeable lithium battery, comprising
the positive electrode as claimed in claim 12 or claim 13;
a negative electrode; and
an electrolyte.

15. The rechargeable lithium battery as claimed in claim 14, wherein
a charging limit voltage of the rechargeable lithium battery is greater than or equal to 4.45 V.
